# EUROPEAN PATENT APPLICATION

(11) **EP 4 598 099 A1**
(43) Date of publication of application: **06.08.2025**
(21) Application number: 23872552.7
(22) Date of filing: 28.09.2023
(51) Int. Cl.: H04W 24/02

(54) **SETTING OF COMMUNICATION CONTROL PROCEDURE RELATING TO COMMUNICATION CONTROL MODEL**

(30) Priority: 30.09.2022 JP 2022158717
(71) Applicant: Rakuten Mobile, Inc., Tokyo 158-0094 (JP)
(72) Inventor: MUHAMMAD, Awn, Tokyo 158-0094 (JP); KITAGAWA, Koichiro, Tokyo 158-0094 (JP)
(74) Representative: Betten & Resch
(86) International application number: PCT/JP2023/035501
(87) International publication number: WO 2024/071331

(57) **Abstract**

A communication control apparatus includes at least one processor that performs: causing a communication control model provider to provide a communication control model concerning communication control between a communication device and a base station that provides a communication cell to the communication device, to at least one of the communication device and the base-station side; causing a control entity setter to set a control entity of the communication control model to either the communication device or the base-station side; and causing a communication control procedure setter to set a communication control procedure for the communication control model in accordance with the location where the communication control model is provided and the control entity.

## Description

### [TECHNICAL FIELD]

The present disclosure relates to setting of communication control procedure concerning communication control model.

### [BACKGROUND ART]

Number, types, and applications of wireless communication devices, hereinafter also collectively referred to as communication device, represented by smartphones or Internet of Things (IoT) devices, continue to increase. Wireless communication standards also continue to be expanded or improved. The commercial service of the fifth-generation mobile communication system known as "5G", for example, started in 2018, and efforts still continue by 3GPP (Third Generation Partnership Project) for further developing its standards or specifications. Preliminary works have also started to develop new standards for "6G" or the sixth-generation mobile communication system, which would be the next-generation wireless communication standards following 5G.

### [CITATION LIST]

### [PATENT LITERATURE]

[PATENT LITERATURE 1] Japanese Patent Application Publication NO. 2010-278886

### [SUMMARY OF INVENTION]

### [TECHNICAL PROBLEM]

With the development of technologies related to artificial intelligence (AI) or machine learning (ML), hereinafter also collectively referred to as AI/ML or AIML, the use of such AI/ML technologies for communication control in mobile communication networks is considered. Mobile communication networks are divided into two portions or two sides: the communication-device side, hereinafter also referred to as UE side, and the network side, hereinafter also referred to as NW side or base-station side. Here, UE (User Equipment) can be another name of communication device. The network side includes base stations that provide communication service to UE. Requirements, roles and responsibilities, operations or the like on the UE side and the NW side have not been sufficiently defined, in case for introducing the AI/ML technology into such a mobile communication network.

The present disclosure has been made in consideration of such circumstances for providing a communication control apparatus or the like that can set an appropriate communication control procedure concerning a communication control model.

### [SOLUTION TO PROBLEM]

In order to solve the above issue, a communication control apparatus in one embodiment of the present disclosure includes at least one processor that performs: causing a communication control model provider to provide a communication control model concerning communication control between a communication device and a base station that provides a communication cell to the communication device, to at least one of the communication device and the base-station side; causing a control entity setter to set a control entity of the communication control model to either the communication device or the base-station side; and causing a communication control procedure setter to set a communication control procedure for the communication control model in accordance with the location where the communication control model is provided and the control entity.

According to the embodiment, the communication control procedure between the communication device and the base station concerning the communication control model can be appropriately set, in accordance with the location where the communication control model is provided (the communication device and/or the base-station side) and the control entity (the communication device or the base-station side) .

Another embodiment of the present disclosure is also a communication control apparatus. The communication control apparatus includes at least one processor that performs: causing a communication control model provider to provide a communication control model concerning communication control between a communication device and a base station that provides a communication cell to the communication device, to at least one of the communication device and the base-station side; and causing a communication control procedure setter to set a communication control procedure for sharing information concerning the use of the communication control model from the one of the communication device and the base-station side to the other.

Further another embodiment of the present disclosure is also a communication control apparatus. The communication control apparatus includes at least one processor that performs: causing a communication control model provider to provide a communication control model concerning communication control between a communication device and a base station that provides a communication cell to the communication device, to at least one of the communication device and the base-station side; and causing a communication control procedure setter to set a communication control procedure for providing a request concerning the use of the communication control model from the other of the communication device and the base-station side to the one.

Further another embodiment of the present disclosure is a communication control method. The communication control method includes: providing a communication control model concerning communication control between a communication device and a base station that provides a communication cell to the communication device, to at least one of the communication device and the base-station side; setting a control entity of the communication control model to either the communication device or the base-station side; and setting a communication control procedure for the communication control model in accordance with the location where the communication control model is provided and the control entity.

Further another embodiment of the present disclosure is also a communication control method. The communication control method includes: providing a communication control model concerning communication control between a communication device and a base station that provides a communication cell to the communication device, to at least one of the communication device and the base-station side; and setting a communication control procedure for sharing information concerning the use of the communication control model from the one of the communication device and the base-station side to the other.

Further another embodiment of the present disclosure is also a communication control method. The communication control method includes: providing a communication control model concerning communication control between a communication device and a base station that provides a communication cell to the communication device, to at least one of the communication device and the base-station side; and setting a communication control procedure for providing a request concerning the use of the communication control model from the other of the communication device and the base-station side to the one.

Further another embodiment of the present disclosure is a computer-readable medium storing a communication control program. The communication control program causes a computer to perform: providing a communication control model concerning communication control between a communication device and a base station that provides a communication cell to the communication device, to at least one of the communication device and the base-station side; setting a control entity of the communication control model to either the communication device or the base-station side; and setting a communication control procedure for the communication control model in accordance with the location where the communication control model is provided and the control entity.

Further another embodiment of the present disclosure is also a computer-readable medium storing a communication control program. The communication control program causes a computer to perform: providing a communication control model concerning communication control between a communication device and a base station that provides a communication cell to the communication device, to at least one of the communication device and the base-station side; and setting a communication control procedure for sharing information concerning the use of the communication control model from the one of the communication device and the base-station side to the other.

Further another embodiment of the present disclosure is also a computer-readable medium storing a communication control program. The communication control program causes a computer to perform: providing a communication control model concerning communication control between a communication device and a base station that provides a communication cell to the communication device, to at least one of the communication device and the base-station side; and setting a communication control procedure for providing a request concerning the use of the communication control model from the other of the communication device and the base-station side to the one.

It should be noted that any combination of the above components, or any conversion of the expression of the present disclosure among methods, devices, systems, storage media, computer programs and the like, are also encompassed within the present disclosure.

### [ADVANTAGEOUS EFFECTS OF INVENTION]

According to the present disclosure, an appropriate communication control procedure concerning a communication control model can be set.

### [BRIEF DESCRIPTION OF DRAWINGS]

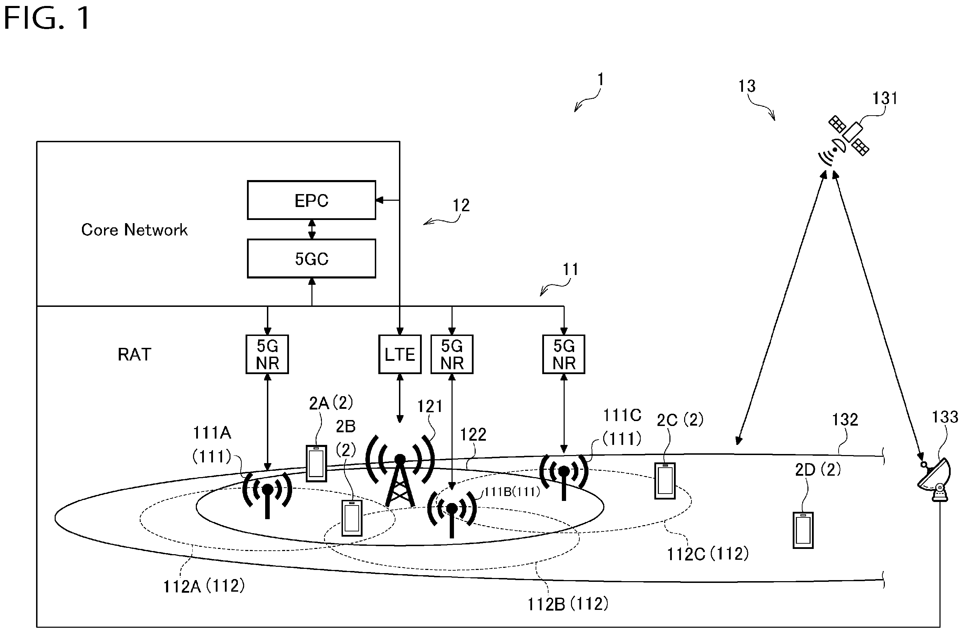

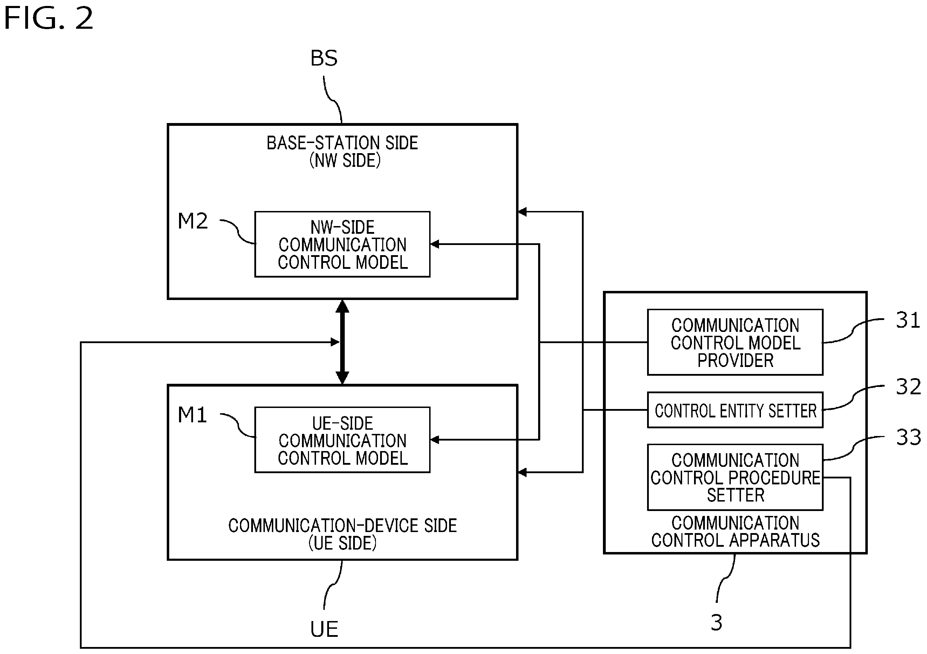

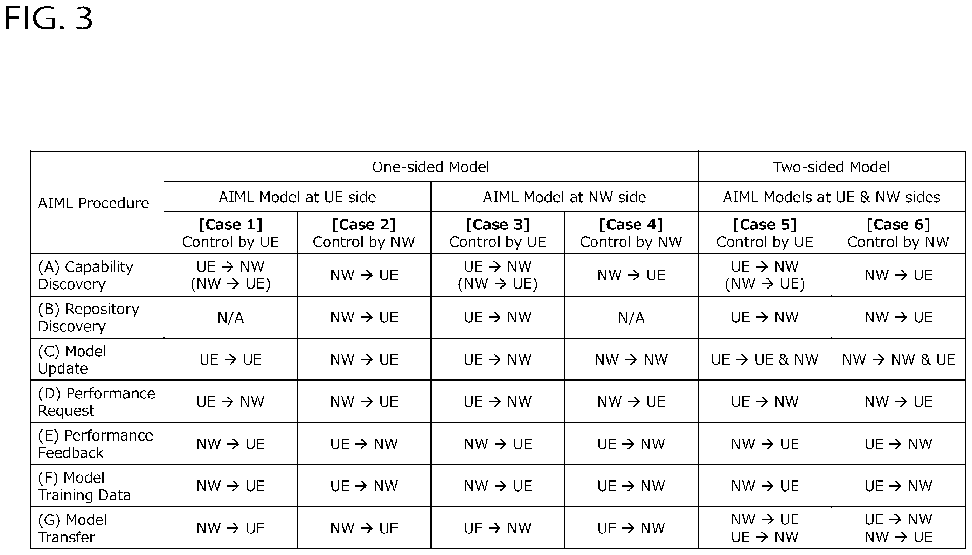

Fig. 1 schematically shows an overview of a wireless communication system to which the communication control apparatus is applied; Fig. 2 is a functional block diagram of the communication control apparatus; and Fig. 3 is a table showing an overview of the communication control procedure set by the communication control procedure setter.

### [DESCRIPTION OF EMBODIMENTS]

Fig. 1 schematically shows an overview of a wireless communication system 1 to which the communication control apparatus according to an embodiment of the present disclosure is applied. The wireless communication system 1 includes a 5G wireless communication system 11 and a satellite communication system 13. The 5G wireless communication system 11 complies with the fifth-generation mobile communication (5G) system. The 5G system uses NR (New Radio) or 5G NR (Fifth Generation New Radio) as the radio access technology (RAT), and uses 5GC (Fifth Generation Core) as the core network (CN). The satellite communication system 13 handles satellite communication via a communication satellite 131. Although not shown in the figure, the wireless communication system 1 may include: wireless communication systems of a generation later than 5G such as 6G; and any wireless communication systems not associated with those generations such as Wi-Fi (registered trademark).

The 5G wireless communication system 11 includes a plurality of 5G base stations 111A, 111B, and 111C installed on the ground, hereinafter also collectively referred to as 5G base station 111. The 5G base station 111 can communicate through 5G NR with communication devices 2A, 2B, 2C, and 2D, hereinafter also collectively referred to as communication device 2. The communication device 2 such as smartphone is also referred to as UE (User Equipment). The 5G base station 111 is also referred to as gNodeB (gNB). The coverage or support range of the respective 5G base stations 111A, 111B, and 111C is referred to as a cell. The respective cells 112A, 112B, and 112C, hereinafter also collectively referred to as 5G cell 112, is illustrated in the figure.

The size of the 5G cell 112 by the 5G base station 111 is arbitrary, but typically ranges from a few meters to several tens of kilometers in radius. Although there is no established definition, a cell with a radius of a few meters to ten meters may be called a femtocell, a cell with a radius of ten meters to several tens of meters may be called a picocell, a cell with a radius of several tens of meters to several hundreds of meters may be called a microcell, and a cell with a radius of more than several hundreds of meters may be called a macrocell. In 5G, high frequency radio waves such as millimeter waves are often used. Their high tendency to propagate in a straight-line causes the radio waves to be blocked by obstacles, shortening the communication distance. For this reason, 5G tends to use more small cells than 4G and earlier generations.

The communication device 2 can perform the 5G communication when it is located within at least one of the plurality of 5G cells 112A, 112B, and 112C. In the example shown in the figure, the communication device 2B in the 5G cells 112A and 112B can communicate with both the 5G base stations 111A and 111B through 5G NR. The communication device 2C in the 5G cell 112C can communicate with the 5G base station 111C through 5G NR. The communication devices 2A and 2D cannot communicate through 5G NR, as they are outside of all the 5G cells 112A, 112B, and 112C. The 5G communication based on 5G NR between each communication device 2 and each 5G base station 111 is managed by the 5GC as the core network. For example, the 5GC: transfers data to and from each 5G base station 111; transfers data to and from external networks such as the satellite communication system 13 and the Internet; and handles mobility management of the communication device 2.

If we take a look at each communication device 2A, 2B, 2C, and 2D in the example shown in the figure, the communication device 2B can perform the 5G communication with the 5G base stations 111A and 111B, and the communication device 2C can perform the 5G communication with the 5G base station 111C. In case one communication device 2 (e.g., 2B) can communicate with a plurality of base stations (e.g., 111A and 111B), one base station is selected under the control of the 5GC as the core network. For example, one base station is selected as the most suitable for the communication device 2B based on communication quality or the like. The communication device 2D cannot perform the communication with any of the 5G base stations 111. Therefore, the communication device 2D would perform the communication through the satellite communication system 13 described below.

The satellite communication system 13 is a wireless communication system using communication satellites 131 as non-terrestrial base stations. The communication satellite 131 may be a low-earth-orbit satellite flying in the low-earth-orbit outer space with altitude of 500 to 700 km above the ground. The coverage or support range of the communication satellite 131 is referred to as a cell, similar to the 5G base station 111. Such a satellite communication cell 132 is illustrated in the figure. As such, the communication satellite 131 as a non-terrestrial base station provides a satellite communication cell 132 as a non-terrestrial communication cell onto the ground. The communication device 2 on the ground can perform the satellite communication when it is located within the satellite communication cell 132. The communication satellite 131 as the base station in the satellite communication system 13 can perform wireless communication with the communication device 2 within the satellite communication cell 132, similar to the 5G base station 111 in the 5G wireless communication system 11. Such a wireless communication between the communication satellite 131 and the communication device 2 may be performed directly or indirectly via an aircraft or the like. The radio access technology used by the communication satellite 131 for wireless communication with the communication device 2 in the satellite communication cell 132 may be: 5G NR used by the 5G base station 111; or any other radio access technology available for the communication device 2. Therefore, the communication device 2 does not have to be equipped with any special functions or components for the satellite communication.

The satellite communication system 13 is equipped with a gateway 133 as a ground station installed on the ground. The gateway 133 can communicate with the communication satellite 131. The gateway 133 is equipped with a satellite antenna for communicating with the communication satellite 131. The gateway 133 is also connected to the 5G base station 111 as the terrestrial base station that constitutes a terrestrial network (TN). In such a manner, the gateway 133 connects the non-terrestrial network (NTN) constituted by the communication satellite 131 as the non-terrestrial base station or the satellite base station, and the terrestrial network TN constituted by the terrestrial base station 111. That is, the mutual communication between the non-terrestrial network NTN and the terrestrial network TN can be established via the gateway 133. In case the communication satellite 131 performs the 5G communication with the communication device 2 in the satellite communication cell 132 through 5G NR, the 5GC is used as the core network. In such a case, the communication satellite 131 is connected to the 5GC via the gateway 133, and the communication device 2 is connected to the 5GC via the 5G base station 111 or the 5G radio access network in the TN. In such a manner, appropriate coordination is made among different wireless communication systems such as the 5G wireless communication system 11, and the satellite communication system 13 via the gateway 133.

The satellite communication through the communication satellites 131 is mainly used for covering areas with no or few terrestrial base stations such as the 5G base station 111. In the example shown in the figure, the communication device 2D located outside all the communication cells by the terrestrial base stations would communicate with the communication satellite 131. On the other hand, the communication devices 2A, 2B, and 2C also located inside the satellite communication cell 132 would not communicate with the communication satellite 131 in principle, even if they can. This is because they are in good communication with either of the terrestrial base stations. As such, the communication devices 2A, 2B, and 2C would communicate with the terrestrial base stations instead of the communication satellite 131, thereby saving the limited communication resources including power of the communication satellite 131 for use by the communication device 2D or the like. The communication satellite 131 uses beamforming to direct the communication radio waves to the communication device 2D in the satellite communication cell 132, thereby improving the communication quality with the communication device 2D.

The size of the satellite communication cell 132 by the communication satellite 131 as the satellite base station depends on the number of beams emitted by the communication satellite 131. For example, the satellite communication cell 132 with a diameter of approximately 24 km can be formed by combining up to 2,800 beams. As illustrated, the satellite communication cell 132 is typically larger than a terrestrial communication cell such as the 5G cell 112. Such a satellite communication cell 132 could contain one or more 5G cells 112 inside it. The above example shows the communication satellite 131 as a flying non-terrestrial base station, which flies in the low-earth-orbit outer space with altitude of 500 to 700 km above the ground. However, a communication satellite flying in the geostationary orbit or other higher orbit in outer space, or an unmanned or manned aircraft or a drone flying in the stratosphere or other lower (e.g., approximately 20 km above the ground) atmosphere may be used as a non-terrestrial base station in addition to or instead of the communication satellite 131.

Fig. 2 is a functional block diagram of the communication control apparatus 3 according to the present embodiment. The communication control apparatus 3 includes a communication control model provider 31, a control entity setter 32, and a communication control procedure setter 33. Some of the functional blocks can be omitted as long as the communication control apparatus 3 realizes at least some of the operations and/or the effects described below. The functional blocks are realized by the cooperation of hardware resources and software to be executed using them. Examples of such hardware resources include a central processing unit, a memory, an input device, and an output device of a computer, or a peripheral device connected to the computer. The types or the installation locations of the computer are freely selected. Each of the above functional blocks may be realized by hardware resources of a single computer, or by combining hardware resources distributed across a plurality of computers. Especially in the present embodiment, some or all of the functional blocks of the communication control apparatus 3 may be realized in a centralized or distributed manner by computer or processor provided in the communication device 2, the base station (a distributed unit and/or a central unit) 111, 131, the gateway 133, or the core network.

The communication control model provider 31 provides a communication control model concerning communication control between the communication device 2 and the base station 111, 131 that provides the communication cell 112, 132 to the communication device 2, to at least one of the communication-device side UE and the base-station side BS. Here, the "communication-device side" is configured by one or more communication devices 2. Besides, the "base-station side" or the "network side" is configured by the base station 111, 131, the gateway 133, the core network, or the like. It should be noted that, in case relay stations, repeaters, IAB (Integrated Access and Backhaul) nodes, or the like that relay communication radio waves between the communication device 2 and base station 111, 131 are provided, they also belong to the "base-station side" or the "network side.

The communication control model M1 provided by the communication control model provider 31 to the communication-device side UE is stored in an internal storage or an internal memory of the communication device 2 itself or in an external storage or an external memory accessible by the communication device 2 in real time. Besides, the communication control model M2 provided by the communication control model provider 31 to the base-station side BS is stored in an internal storage or an internal memory of at least one of the base station 111, 131 (the distributed unit and/or the central unit), the relay station, the repeater, the IAB node, the gateway 133, and the core network itself or in an external storage or an external memory accessible by at least one of them in real time.

The communication control models M1 and/or M2 provided by the communication control model provider 31 to the communication-device side UE and/or the base-station side BS are, for example, machine learning models based on AI/ML technology.

The communication control model M1 of the communication-device side UE is a model that derives appropriate actions or processes in accordance with the circumstances in mobile communications that the communication-device side UE performs with the base-station side BS. The communication control model M1 has been trained in advance by comprehensive training data covering various situations assumed on the communication-device side UE and/or various inputs assumed from the base-station side BS or the user. Such a communication control model M1 specifies actions or processes to be taken by the communication-device side UE, in accordance with the current situation on the communication-device side UE and/or the current input from the base-station side BS or the user.

Similarly, the communication control model M2 of the base-station side BS is a model that derives appropriate actions or processes in accordance with the circumstances in mobile communications that the base-station side BS performs with the communication-device side UE. The communication control model M2 has been trained in advance by comprehensive training data covering various situations assumed on the base-station side BS and/or various inputs assumed from the communication-device side UE or the operator. Such a communication control model M2 specifies actions or processes to be taken by the base-station side BS, in accordance with the current situation on the base-station side BS and/or the current input from the communication-device side UE or the operator.

As detailed below, only one of the UE-side communication control model M1 and the NW-side communication control model M2 may be provided by the communication control model provider 31, or both of them may be provided by the communication control model provider 31. Besides, a plurality of the UE-side communication control models M1 and a plurality of the NW-side communication control models M2 may be provided by the communication control model provider 31, respectively. In such a case, the communication-device side UE and the base-station side BS can select and use one or more communication control models M1 and M2 appropriate for their respective circumstances.

The control entity setter 32 sets control entities of the communication control models M1 and/or M2 provided by the communication control model provider 31 to the communication-device side UE and/or the base-station side BS, to either the communication-device side UE or the base-station side BS. The control entity not only governs the basic controls of the communication control models M1 and/or M2, such as execution, suspension, modification, and deletion, but also leads all or portion of the various communication control procedures described below with respect to Fig. 3. Besides, the location where the communication control model M1, M2 is provided by the communication control model provider 31 (the communication-device side UE for the communication control model M1 and the base-station side BS on for the communication control model M2) and the control entity set by the control entity setter 32 may be the same or different. However, it is preferable to have a unified or a single control entity of the communication control models M1 and M2, either the communication-device side UE or the base-station side BS, while the communication control models M1 and M2 may be provided to both the communication-device side UE and the base-station side BS.

The communication control procedure setter 33 sets a communication control procedure for the communication control models M1 and/or M2 in accordance with the location where the communication control models M1 and/or M2 is provided by the communication control model provider 31 (the communication-device side UE and/or the base-station side BS) and the control entity set by the control entity setter 32 (the communication-device side UE or the base-station side BS).

Fig. 3 is a table showing an overview of the communication control procedures set by the communication control procedure setter 33. The communication control procedures or the AI/ML procedures in the example of Fig. 3 are classified into seven categories (A) through (G).

The communication control procedure (A) relates to confirming whether or not the communication-device side UE and/or the base-station side BS can support the communication control models M1 and/or M2 or the AI/ML technology in general (AIML Capability Discovery). The communication control procedure (B) relates to confirming the storage location (the repository) of the communication control models M1 and/or M2 on the communication-device side UE and/or the base-station side BS (AIML Model Repository Discovery). The communication control procedure (C) relates to initiating or triggering the update of the communication control models M1 and/or M2 (AIML Model Update). The communication control procedure (D) relates to feedback request for the performance of the communication control models M1 and/or M2 on the communication-device side UE and/or the base-station side BS (AIML Model Performance Feedback Request). The communication control procedure (E) relates to feedback of the performance of the communication control models M1 and/or M2 on the communication-device side UE and/or the base-station side BS (AIML Model Performance Feedback). The communication control procedure (F) relates to data or notification concerning the training of the communication control models M1 and/or M2 (AIML Model Training). The communication control procedure (G) relates to transfer of the communication control models M1 and/or M2 between the communication-device side UE and the base-station side BS (AIML Model Transfer).

The communication control procedures set by the communication control procedure setter 33 can be broadly classified into one-sided model in case where the communication control model provider 31 provides only one of the communication control models M1 and M2, or two-sided model in case where the communication control model provider 31 provides both of the communication control models M1 and M2. The one-sided model can be further classified into the case where the communication control model provider 31 provides the communication control model M1 to the communication-device side UE (AIML Model at UE side) or the case where the communication control model provider 31 provides the communication control model M2 to the base-station side BS (AIML Model at NW side). In the two-sided model, the communication control model provider 31 provides the communication control models M1 and M2 to the communication-device side UE and the base-station side BS (AIML Models at UE & NW sides). Each of the cases is further divided into two cases in accordance with the control entity (the communication-device side UE or the base-station side BS) set by the control entity setter 32. As such, the communication control procedures set by the communication control procedure setter 33 are broadly classified into the six cases (Case 1-6) or patterns shown mainly in Fig. 3. Each of the cases will be described below.

In the first case (Case 1) in Fig. 3, the communication control model provider 31 provides the communication control model M1 to the communication-device side UE, and the control entity setter 32 sets the control entity of the communication control model M1 to the communication-device side UE. The communication control procedure setter 33 sets, for the communication control model M1 provided to the communication-device side UE and having the communication-device side UE as the control entity, the communication control procedure including at least one of the following.

The communication control procedure (A) includes (A1) the communication-device side UE as the control entity acquiring information concerning whether or not the base-station side BS can support the communication control model M1 or the AI/ML technology in general, from the base-station side BS or the like (UE -> NW). In case the communication-device side UE executes its own communication control model M1, but the base-station side BS as its communication partner cannot appropriately handle the execution results of the communication control model M1, the communication control procedure setter 33 does not allow the communication-device side UE to execute the communication control model M1. The communication control procedure (A) may include (A2) the base-station side BS acquiring information concerning whether or not the communication-device side UE can support the communication control model M1 or the AI/ML technology in general, from the communication-device side UE or the like (NW -> UE). The communication control procedure (A2) enables the base-station side BS to recognize the existence and/or the contents of the communication control model M1 or the possibility and/or the manner of its execution on the communication-device side UE. The communication control procedure (C) includes the communication-device side UE as the control entity initiating or triggering the update of its own communication control model M1 (UE -> UE). Here, the update of the communication control model M1 may update the contents of the communication control model M1 itself or switch to another appropriate communication control model M1.

The communication control procedure (D) includes the communication-device side UE as the control entity acquiring information concerning the performance of the communication control model M1 on the base-station side BS, from the base-station side BS. For example, the communication-device side UE as the control entity requests for the feedback concerning the performance of the communication control model M1 from the base-station side BS (UE -> NW). The communication control procedure (E) includes the base-station side BS, in response to the feedback request in the communication control procedure (D) or voluntarily, providing or feeding back information concerning the performance of the communication control model M1 on the base-station side BS, to the communication-device side UE as the control entity (NW -> UE). Although the communication control model M1 itself is executed on the communication-device side UE, the feedback is provided from the base-station side BS receiving the executed result, thereby promoting the improvement of the communication control model M1 or the switching to another appropriate communication control model M1.

The communication control procedure (F) may include (F1) the communication-device side UE as the control entity acquiring data for training its own communication control model M1 from the base-station side BS (NW -> UE). Besides, the communication control procedure (F) may include (F2) the communication-device side UE as the control entity notifying the base-station side BS of the initiation of the training of its own communication control model M1. The communication control procedure (F2) enables the base-station side BS to recognize the initiation of the training of the communication control model M1 on the communication-device side UE, and to provide data for such training to the communication-device side UE as necessary.

The communication control procedure (G) may include the communication-device side UE as the control entity acquiring the communication control model M1 updated by the base-station side BS, i.e., the transfer of the communication control model M1 from the base-station side BS to the communication-device side UE (NW -> UE). The base-station side BS may update all or portion of the communication control model M1 and provide it to the communication-device side UE, or may individually notify the communication-device side UE of the portion or the contents to be updated in the communication control model M1. It is preferable that such a model transfer procedure is led by the base-station side BS from which the model is transferred.

In the second case (Case 2) in Fig. 3, the communication control model provider 31 provides the communication control model M1 to the communication-device side UE, and the control entity setter 32 sets the control entity of the communication control model M1 to the base-station side BS. The communication control procedure setter 33 sets, for the communication control model M1 provided to the communication-device side UE and having the base-station side BS as the control entity, the communication control procedure including at least one of the following.

The communication control procedure (A) includes the base-station side BS as the control entity acquiring information concerning whether or not the communication-device side UE can support the communication control model M1 or the AI/ML technology in general, from the communication-device side UE or the like (NW -> UE). The communication control procedure (A) enables the base-station side BS to recognize the existence and/or the contents of the communication control model M1 or the possibility and/or the manner of its execution on the communication-device side UE.

The communication control procedure (B) includes the base-station side BS as the control entity acquiring information concerning the storage location (the repository) of the communication control model M1 on the communication-device side UE. For example, the base-station side BS as the control entity requests for the report concerning the storage location of the communication control model M1 from the communication-device side UE (NW -> UE). The communication control procedure (B) enables the base-station side BS as the control entity to directly or indirectly to access the communication control model M1 to be controlled. As a result, the base-station side BS can indirectly execute the communication control model M1 of the communication-device side UE. Besides, the base-station side BS can select and execute the appropriate communication control model M1 in accordance with the situation, in case a plurality of the communication control models M1 are stored in the communication-device side UE.

The communication control procedure (C) includes the base-station side BS as the control entity initiating or triggering the update of the communication control model M1 of the communication-device side UE (NW -> UE). Here, the update of the communication control model M1 may update the contents of the communication control model M1 itself or switch to another appropriate communication control model M1.

The communication control procedure (D) includes the base-station side BS as the control entity acquiring information concerning the performance of the communication control model M1 on the communication-device side UE, from the communication-device side UE. For example, the base-station side BS as the control entity requests for the feedback concerning the performance of the communication control model M1 from the communication-device side UE (NW -> UE). The communication control procedure (E) includes the communication-device side UE, in response to the feedback request in the communication control procedure (D) or voluntarily, providing or feeding back information concerning the performance of the communication control model M1 on the communication-device side UE, to the base-station side BS as the control entity (UE -> NW). The base-station side BS as the control entity that has received the executed result of the communication control model M1 on the communication-device side UE can promote the improvement of the communication control model M1 or the switching to another appropriate communication control model M1.

The communication control procedure (F) may include (F1) the base-station side BS as the control entity acquiring data for training the communication control model M1 of the communication-device side UE, from the communication-device side UE (UE -> NW). The communication control procedure (F1) enables the base-station side BS as the control entity that has received the data (the training data) from the communication-device side UE to perform the training of the communication control model M1 of the communication-device side UE. Besides, the communication control procedure (F) may include (F2) the base-station side BS as the control entity instructing the communication-device side UE to initiate the training of the communication control model M1 of the communication-device side UE. The communication control procedure (F2) enables the communication-device side UE that has received the instruction from the base-station side BS as the control entity to perform the training of its own communication control model M1.

The communication control procedure (G) may include the base-station side BS as the control entity instructing the communication-device side UE to update the communication control model M1, i.e., the transfer of the communication control model M1 from the base-station side BS to the communication-device side UE (NW -> UE). The base-station side BS may update all or portion of the communication control model M1 and provide it to the communication-device side UE, or may individually notify the communication-device side UE of the portion or the contents to be updated in the communication control model M1. It is preferable that such a model transfer procedure is led by the base-station side BS as the control entity from which the model is transferred.

In the third case (Case 3) in Fig. 3, the communication control model provider 31 provides the communication control model M2 to the base-station side BS, and the control entity setter 32 sets the control entity of the communication control model M2 to the communication-device side UE. The communication control procedure setter 33 sets, for the communication control model M2 provided to the base-station side BS and having the communication-device side UE as the control entity, the communication control procedure including at least one of the following.

The communication control procedure (A) includes the communication-device side UE as the control entity acquiring information concerning whether or not the base-station side BS can support the communication control model M2 or the AI/ML technology in general, from the base-station side BS or the like (UE -> NW). The communication control procedure (A1) enables the communication-device side UE to recognize the existence and/or the contents of the communication control model M2 or the possibility and/or the manner of its execution on the base-station side BS. The communication control procedure (A) may include (A2) the base-station side BS acquiring information concerning whether or not the communication-device side UE can support the communication control model M2 or the AI/ML technology in general, from the communication-device side UE or the like (NW -> UE). In case the base-station side BS executes its own communication control model M2, but the communication-device side UE as its communication partner cannot appropriately handle the execution results of the communication control model M2, the communication control procedure setter 33 does not allow the base-station side BS to execute the communication control model M2.

The communication control procedure (B) includes the communication-device side UE as the control entity acquiring information concerning the storage location (the repository) of the communication control model M2 on the base-station side BS. For example, the communication-device side UE as the control entity requests for the report concerning the storage location of the communication control model M2 from the base-station side BS (UE -> NW). The communication control procedure (B) enables the communication-device side UE as the control entity to directly or indirectly to access the communication control model M2 to be controlled. As a result, the communication-device side UE can indirectly execute the communication control model M2 of the base-station side BS. Besides, the communication-device side UE can select and execute the appropriate communication control model M2 in accordance with the situation, in case a plurality of the communication control models M2 are stored in the base-station side BS.

The communication control procedure (C) includes the communication-device side UE as the control entity initiating or triggering the update of the communication control model M2 of the base-station side BS (UE -> NW). Here, the update of the communication control model M2 may update the contents of the communication control model M2 itself or switch to another appropriate communication control model M2.

The communication control procedure (D) includes the communication-device side UE as the control entity acquiring information concerning the performance of the communication control model M2 on the base-station side BS, from the base-station side BS. For example, the communication-device side UE as the control entity requests for the feedback concerning the performance of the communication control model M2 from the base-station side BS (UE -> NW). The communication control procedure (E) includes the base-station side BS, in response to the feedback request in the communication control procedure (D) or voluntarily, providing or feeding back information concerning the performance of the communication control model M2 on the base-station side BS, to the communication-device side UE as the control entity (NW -> UE). The communication-device side UE as the control entity that has received the executed result of the communication control model M2 on the base-station side BS can promote the improvement of the communication control model M2 or the switching to another appropriate communication control model M2.

The communication control procedure (F) may include (F1) the communication-device side UE as the control entity acquiring data for training the communication control model M2 of the base-station side BS, from the base-station side BS (NW -> UE). The communication control procedure (F1) enables the communication-device side UE as the control entity that has received the data (the training data) from the base-station side BS to perform the training of the communication control model M2 of the base-station side BS. Besides, the communication control procedure (F) may include (F2) the communication-device side UE as the control entity instructing the base-station side BS to initiate the training of the communication control model M2 of the base-station side BS. The communication control procedure (F2) enables the base-station side BS that has received the instruction from the communication-device side UE as the control entity to perform the training of its own communication control model M2.

The communication control procedure (G) may include the communication-device side UE as the control entity instructing the base-station side BS to update the communication control model M2, i.e., the transfer of the communication control model M2 from the communication-device side UE to the base-station side BS (UE -> NW). The communication-device side UE may update all or portion of the communication control model M2 and provide it to the base-station side BS, or may individually notify the base-station side BS of the portion or the contents to be updated in the communication control model M2. It is preferable that such a model transfer procedure is led by the communication-device side UE as the control entity from which the model is transferred.

In the fourth case (Case 4) in Fig. 3, the communication control model provider 31 provides the communication control model M2 to the base-station side BS, and the control entity setter 32 sets the control entity of the communication control model M2 to the base-station side BS. The communication control procedure setter 33 sets, for the communication control model M2 provided to the base-station side BS and having the base-station side BS as the control entity, the communication control procedure including at least one of the following.

The communication control procedure (A) includes the base-station side BS as the control entity acquiring information concerning whether or not the communication-device side UE can support the communication control model M2 or the AI/ML technology in general, from the communication-device side UE or the like (NW -> UE). In case the base-station side BS executes its own communication control model M2, but the communication-device side UE as its communication partner cannot appropriately handle the execution results of the communication control model M2, the communication control procedure setter 33 does not allow the base-station side BS to execute the communication control model M2. The communication control procedure (C) includes the base-station side BS as the control entity initiating or triggering the update of its own communication control model M2 (NW -> NW). Here, the update of the communication control model M2 may update the contents of the communication control model M2 itself or switch to another appropriate communication control model M2.

The communication control procedure (D) includes the base-station side BS as the control entity acquiring information concerning the performance of the communication control model M2 on the communication-device side UE, from the communication-device side UE. For example, the base-station side BS as the control entity requests for the feedback concerning the performance of the communication control model M2 from the communication-device side UE (NW -> UE). The communication control procedure (E) includes the communication-device side UE, in response to the feedback request in the communication control procedure (D) or voluntarily, providing or feeding back information concerning the performance of the communication control model M2 on the communication-device side UE, to the base-station side BS as the control entity (UE -> NW). Although the communication control model M2 itself is executed on the base-station side BS, the feedback is provided from the communication-device side UE receiving the executed result, thereby promoting the improvement of the communication control model M2 or the switching to another appropriate communication control model M2.

The communication control procedure (F) may include (F1) the base-station side BS as the control entity acquiring data for training its own communication control model M2 from the communication-device side UE (UE -> NW). Besides, the communication control procedure (F) may include (F2) the base-station side BS as the control entity notifying the communication-device side UE of the initiation of the training of its own communication control model M2. The communication control procedure (F2) enables the communication-device side UE to recognize the initiation of the training of the communication control model M2 on the base-station side BS, and to provide data for such training to the base-station side BS as necessary.

The communication control procedure (G) may include the base-station side BS as the control entity acquiring the communication control model M2 updated by the communication-device side UE, i.e., the transfer of the communication control model M2 from the communication-device side UE to the base-station side BS (UE -> NW). The communication-device side UE may update all or portion of the communication control model M2 and provide it to the base-station side BS, or may individually notify the base-station side BS of the portion or the contents to be updated in the communication control model M2. It is preferable that such a model transfer procedure is led by the communication-device side UE from which the model is transferred.

In the fifth case (Case 5) in Fig. 3, the communication control model provider 31 provides both the communication control models M1 and M2 to the communication-device side UE and the base-station side BS, and the control entity setter 32 sets the control entity of the communication control models M1 and M2 to the communication-device side UE. The communication control procedure setter 33 sets, for the communication control models M1 and M2 provided to the communication-device side UE and the base-station side BS, and having the communication-device side UE as the control entity, the communication control procedure including at least one of the following.

The communication control procedure (A) includes (A1) the communication-device side UE as the control entity acquiring information concerning whether or not the base-station side BS can support the communication control models M1 and M2, or the AI/ML technology in general, from the base-station side BS or the like (UE -> NW). In case, for example, the communication-device side UE executes its own communication control model M1, but the base-station side BS as its communication partner cannot appropriately handle the execution results of the communication control model M1, the communication control procedure setter 33 does not allow the communication-device side UE to execute the communication control model M1. Besides, the communication control procedure (A1) enables the communication-device side UE to recognize the existence and/or the contents of the communication control model M2 or the possibility and/or the manner of its execution on the base-station side BS.

The communication control procedure (A) may include (A2) the base-station side BS acquiring information concerning whether or not the communication-device side UE can support the communication control models M1 and M2, or the AI/ML technology in general, from the communication-device side UE or the like (NW -> UE). The communication control procedure (A2) enables the base-station side BS to recognize the existence and/or the contents of the communication control model M1 or the possibility and/or the manner of its execution on the communication-device side UE.

The communication control procedure (B) includes the communication-device side UE as the control entity acquiring information concerning the storage location (the repository) of the communication control model M2 on the base-station side BS. For example, the communication-device side UE as the control entity requests for the report concerning the storage location of the communication control model M2 from the base-station side BS (UE -> NW). The communication control procedure (B) enables the communication-device side UE as the control entity to directly or indirectly to access the communication control model M2 to be controlled. As a result, the communication-device side UE can indirectly execute the communication control model M2 of the base-station side BS. Besides, the communication-device side UE can select and execute the appropriate communication control model M2 in accordance with the situation, in case a plurality of the communication control models M2 are stored in the base-station side BS.

The communication control procedure (C) includes the communication-device side UE as the control entity initiating or triggering the update of its own communication control model M1 and/or the communication control model M2 of the base-station side BS (UE -> UE & NW). Here, the update of the communication control models M1 and M2 may update the contents of the communication control models M1 and M2 themselves or switch to other appropriate communication control models M1 and M2.

The communication control procedure (D) includes the communication-device side UE as the control entity acquiring information concerning the performance of the communication control models M1 and M2 on the base-station side BS, from the base-station side BS. For example, the communication-device side UE as the control entity requests for the feedback concerning the performance of the communication control models M1 and M2 from the base-station side BS (UE -> NW). The communication control procedure (E) includes the base-station side BS, in response to the feedback request in the communication control procedure (D) or voluntarily, providing or feeding back information concerning the performance of the communication control models M1 and M2 on the base-station side BS, to the communication-device side UE as the control entity (NW -> UE). Although the communication control model M1 itself is executed on the communication-device side UE, the feedback is provided from the base-station side BS receiving the executed result, thereby promoting the improvement of the communication control model M1 or the switching to another appropriate communication control model M1. Besides, the communication-device side UE as the control entity that has received the executed result of the communication control model M2 on the base-station side BS can promote the improvement of the communication control model M2 or the switching to another appropriate communication control model M2.

The communication control procedure (F) may include (F1) the communication-device side UE as the control entity acquiring data for training its own communication control model M1 and the communication control model M2 of the base-station side BS, from the base-station side BS (NW - > UE). The communication control procedure (F1) enables the communication-device side UE as the control entity that has received the data (the training data) from the base-station side BS to perform the training of the communication control model M1 of the communication-device side UE and the communication control model M2 of the base-station side BS. Besides, the communication control procedure (F) may include (F2) the communication-device side UE as the control entity notifying the base-station side BS of the initiation of the training of its own communication control model M1 and/or the communication control model M2 of the base-station side BS. The communication control procedure (F2) enables the base-station side BS to recognize the initiation of the training of the communication control models M1 and/or M2 on the communication-device side UE, and to provide data for such training to the communication-device side UE as necessary. Furthermore, the communication control procedure (F) may include (F3) the communication-device side UE as the control entity instructing the base-station side BS to initiate the training of the communication control model M2 of the base-station side BS. The communication control procedure (F3) enables the base-station side BS that has received the instruction from the communication-device side UE as the control entity to perform the training of its own communication control model M2.

The communication control procedure (G) may include (G1) the communication-device side UE as the control entity acquiring the communication control model M1 updated by the base-station side BS, i.e., the transfer of the communication control model M1 from the base-station side BS to the communication-device side UE (NW -> UE). The base-station side BS may update all or portion of the communication control model M1 and provide it to the communication-device side UE, or may individually notify the communication-device side UE of the portion or the contents to be updated in the communication control model M1. It is preferable that such a model transfer procedure is led by the base-station side BS from which the model is transferred. Besides, the communication control procedure (G) may include (G2) the communication-device side UE as the control entity instructing the base-station side BS to update the communication control model M2, i.e., the transfer of the communication control model M2 from the communication-device side UE to the base-station side BS (UE -> NW). The communication-device side UE may update all or portion of the communication control model M2 and provide it to the base-station side BS, or may individually notify the base-station side BS of the portion or the contents to be updated in the communication control model M2. It is preferable that such a model transfer procedure is led by the communication-device side UE as the control entity from which the model is transferred.

In the sixth case (Case 6) in Fig. 3, the communication control model provider 31 provides both the communication control models M2 and M1 to the base-station side BS and the communication-device side UE, and the control entity setter 32 sets the control entity of the communication control models M2 and M1 to the base-station side BS. The communication control procedure setter 33 sets, for the communication control models M2 and M1 provided to the base-station side BS and the communication-device side UE, and having the base-station side BS as the control entity, the communication control procedure including at least one of the following.

The communication control procedure (A) includes the base-station side BS as the control entity acquiring information concerning whether or not the communication-device side UE can support the communication control models M2 and M1, or the AI/ML technology in general, from the communication-device side UE or the like (NW -> UE). In case, for example, the base-station side BS executes its own communication control model M2, but the communication-device side UE as its communication partner cannot appropriately handle the execution results of the communication control model M2, the communication control procedure setter 33 does not allow the base-station side BS to execute the communication control model M2. Besides, the communication control procedure (A) enables the base-station side BS to recognize the existence and/or the contents of the communication control model M1 or the possibility and/or the manner of its execution on the communication-device side UE.

The communication control procedure (B) includes the base-station side BS as the control entity acquiring information concerning the storage location (the repository) of the communication control model M1 on the communication-device side UE. For example, the base-station side BS as the control entity requests for the report concerning the storage location of the communication control model M1 from the communication-device side UE (NW -> UE). The communication control procedure (B) enables the base-station side BS as the control entity to directly or indirectly to access the communication control model M1 to be controlled. As a result, the base-station side BS can indirectly execute the communication control model M1 of the communication-device side UE. Besides, the base-station side BS can select and execute the appropriate communication control model M1 in accordance with the situation, in case a plurality of the communication control models M1 are stored in the communication-device side UE.

The communication control procedure (C) includes the base-station side BS as the control entity initiating or triggering the update of its own communication control model M2 and/or the communication control model M1 of the communication-device side UE (NW -> NW & UE). Here, the update of the communication control models M2 and M1 may update the contents of the communication control models M2 and M1 themselves or switch to other appropriate communication control models M2 and M1.

The communication control procedure (D) includes the base-station side BS as the control entity acquiring information concerning the performance of the communication control models M2 and M1 on the communication-device side UE, from the communication-device side UE. For example, the base-station side BS as the control entity requests for the feedback concerning the performance of the communication control models M2 and M1 from the communication-device side UE (NW -> UE). The communication control procedure (E) includes the communication-device side UE, in response to the feedback request in the communication control procedure (D) or voluntarily, providing or feeding back information concerning the performance of the communication control models M2 and M1 on the communication-device side UE, to the base-station side BS as the control entity (UE -> NW). Although the communication control model M2 itself is executed on the base-station side BS, the feedback is provided from the communication-device side UE receiving the executed result, thereby promoting the improvement of the communication control model M2 or the switching to another appropriate communication control model M2. Besides, the base-station side BS as the control entity that has received the executed result of the communication control model M1 on the communication-device side UE can promote the improvement of the communication control model M1 or the switching to another appropriate communication control model M1.

The communication control procedure (F) may include (F1) the base-station side BS as the control entity acquiring data for training its own communication control model M2 and the communication control model M1 of the communication-device side UE, from the communication-device side UE (UE -> NW). The communication control procedure (F1) enables the base-station side BS as the control entity that has received the data (the training data) from the communication-device side UE to perform the training of the communication control model M2 of the base-station side BS and the communication control model M1 of the communication-device side UE. Besides, the communication control procedure (F) may include (F2) the base-station side BS as the control entity notifying the communication-device side UE of the initiation of the training of its own communication control model M2 and/or the communication control model M1 of the communication-device side UE. The communication control procedure (F2) enables the communication-device side UE to recognize the initiation of the training of the communication control models M2 and/or M1 on the base-station side BS, and to provide data for such training to the base-station side BS as necessary. Furthermore, the communication control procedure (F) may include (F3) the base-station side BS as the control entity instructing the communication-device side UE to initiate the training of the communication control model M1 of the communication-device side UE. The communication control procedure (F3) enables the communication-device side UE that has received the instruction from the base-station side BS as the control entity to perform the training of its own communication control model M1.

The communication control procedure (G) may include (G1) the base-station side BS as the control entity acquiring the communication control model M2 updated by the communication-device side UE, i.e., the transfer of the communication control model M2 from the communication-device side UE to the base-station side BS (UE -> NW). The communication-device side UE may update all or portion of the communication control model M2 and provide it to the base-station side BS, or may individually notify the base-station side BS of the portion or the contents to be updated in the communication control model M2. It is preferable that such a model transfer procedure is led by the communication-device side UE from which the model is transferred. Besides, the communication control procedure (G) may include (G2) the base-station side BS as the control entity instructing the communication-device side UE to update the communication control model M1, i.e., the transfer of the communication control model M1 from the base-station side BS to the communication-device side UE (NW -> UE). The base-station side BS may update all or portion of the communication control model M1 and provide it to the communication-device side UE, or may individually notify the communication-device side UE of the portion or the contents to be updated in the communication control model M1. It is preferable that such a model transfer procedure is led by the base-station side BS as the control entity from which the model is transferred.

According to the embodiments described above, the communication control procedures between the communication-device side UE and the base-station side BS concerning the communication control models M1 and M2 can be appropriately set, in accordance with the locations where the communication control models M1 and M2 are provided (the communication-device side UE and/or the base-station side BS) and the control entity (the communication-device side UE or the base-station side BS).

The communication control procedures in each of the cases (Cases 1-6) shown in Fig. 3 facilitate the cooperation between the communication-device side UE and the base-station side BS concerning the communication control models M1 and/or M2. Conversely, the communication control apparatus 3 may not require the communication-device side UE and the base-station side BS to substantially cooperate concerning the communication control models M1 and/or M2. For example, the communication-device side UE and/or the base-station side BS may, in principle, execute their respective communication control models M1 and/or M2 independently. However, even in such a case, it is preferable that the minimum necessary communication is performed between the communication-device side UE and the base-station side BS, as exemplified below.

For example, the communication control procedure setter 33 may set a communication control procedure in which information concerning the use of the communication control models M1 and/or M2 is shared from one of the communication-device side UE and the base-station side BS to the other. For example, in case the communication control model M1 is provided to the communication-device side UE by the communication control model provider 31, the communication control procedure setter 33 sets a communication control procedure that notifies that the communication control model M1 is being used and/or may be used on the communication-device side UE or the like, from the communication-device side UE to the base-station side BS via any IE (Information Element). By such a communication control procedure, the base-station side BS can recognize that it is likely that the communication-device side UE uses the communication control model M1. Therefore, even if a radio link failure (RLF) or other degradation of communication quality or the like occurs due to an abnormality or a deficiency of the communication control model M1, the base-station side BS can consider the possibility that the communication control model M1 is the cause, and can promptly make an inquiry or the like against the communication-device side UE on whether the communication control model M1 works normally or not. Besides, the base-station side BS can objectively evaluate, for example, the communication quality with the communication-device side UE depending on whether the communication control model M1 is used or not. Similarly, in case the communication control model M2 is provided to the base-station side BS by the communication control model provider 31, the communication control procedure setter 33 sets a communication control procedure that notifies that the communication control model M2 is being used and/or may be used on the base-station side BS or the like, from the base-station side BS to the communication-device side UE.

Besides, the communication control procedure setter 33 may set a communication control procedure to provide a request concerning the use of the communication control models M1 and/or M2, to one of the communication-device side UE and the base-station side BS from the other via any IE (Information Element). For example, in case the communication-device side UE cannot appropriately support the communication control model M2 of the base-station side BS or the AI/ML technology in general, it requests the base-station side BS not to use the communication control model M2. The base-station side BS that has received the request refrains from using the communication control model M2, thereby preventing the occurrence of communication failures or the like due to the inability of the communication-device side UE to support the communication control model M2. Similarly, in case the base-station side BS cannot appropriately support the communication control model M1 of the communication-device side UE or the AI/ML technology in general, it requests the communication-device side UE not to use the communication control model M1.

The present disclosure has been described above based on embodiments. It is obvious to those skilled in the art that various variations are possible in combinations of each component or each process disclosed in the exemplary embodiments, and that such variations are also encompassed within the scope of the present disclosure.

It should be noted that the structures, the operations, or the functions of each apparatus or each method described in the embodiments can be realized by hardware resources or software resources, or by cooperation of hardware resources and software resources. Processors, ROMs, RAMs, or various integrated circuits, for example, can be used as hardware resources. Programs such as operating systems and applications, for example, can be used as software resources.

The present disclosure may be expressed as the following items.

### Item 1:

A communication control apparatus comprising at least one processor that performs:
causing a communication control model provider to provide a communication control model concerning communication control between a communication device and a base station that provides a communication cell to the communication device, to at least one of the communication device and the base-station side;
causing a control entity setter to set a control entity of the communication control model to either the communication device or the base-station side; and
causing a communication control procedure setter to set a communication control procedure for the communication control model in accordance with the location where the communication control model is provided and the control entity.

### Item 2:

The communication control apparatus according to item 1, wherein the communication control model provider provides the communication control model to the communication device.

### Item 3:

The communication control apparatus according to item 2, wherein
the control entity setter sets the control entity of the communication control model to the communication device, and wherein
the communication control procedure setter sets, for the communication control model provided to the communication device and having the communication device as the control entity, the communication control procedure including at least one of the following:
   (A1) the communication device acquiring information concerning whether or not the base-station side can support the communication control model;
   (A2) the base-station side acquiring information concerning whether or not the communication device can support the communication control model;
   (C) the communication device initiating the update of the communication control model;
   (D) the communication device acquiring information concerning the performance of the communication control model on the base-station side;
   (E) the base-station side providing the communication device with information concerning the performance of the communication control model on the base-station side;
   (F1) the communication device acquiring data for training the communication control model from the base-station side;
   (F2) the communication device notifying the base-station side of the initiation of the training of the communication control model; and
   (G) the communication device acquiring the communication control model updated by the base-station side.

### Item 4:

The communication control apparatus according to item 2, wherein
the control entity setter sets the control entity of the communication control model to the base-station side, and wherein
the communication control procedure setter sets, for the communication control model provided to the communication device and having the base-station side as the control entity, the communication control procedure including at least one of the following:
   (A) the base-station side acquiring information concerning whether or not the communication device can support the communication control model;
   (B) the base-station side acquiring information concerning the storage location of the communication control model in the communication device;
   (C) the base-station side initiating the update of the communication control model;
   (D) the base-station side acquiring information concerning the performance of the communication control model in the communication device;
   (E) the communication device providing the base-station side with information concerning the performance of the communication control model in communication device;
   (F1) the base-station side acquiring data for training the communication control model from the communication device;
   (F2) the base-station side instructing the communication device to initiate the training of the communication control model; and
   (G) the base-station side instructing the communication device to update the communication control model.

### Item 5:

The communication control apparatus according to item 1, wherein the communication control model provider provides the communication control model to the base-station side.

### Item 6:

The communication control apparatus according to item 5, wherein
the control entity setter sets the control entity of the communication control model to the communication device, and wherein
the communication control procedure setter sets, for the communication control model provided to the base-station side and having the communication device as the control entity, the communication control procedure including at least one of the following:
   (A1) the communication device acquiring information concerning whether or not the base-station side can support the communication control model;
   (A2) the base-station side acquiring information concerning whether or not the communication device can support the communication control model;
   (B) the communication device acquiring information concerning the storage location of the communication control model on the base-station side;
   (C) the communication device initiating the update of the communication control model;
   (D) the communication device acquiring information concerning the performance of the communication control model on the base-station side;
   (E) the base-station side providing the communication device with information concerning the performance of the communication control model on the base-station side;
   (F1) the communication device acquiring data for training the communication control model from the base-station side;
   (F2) the communication device instructing the base-station side to initiate the training of the communication control model; and
   (G) the communication device instructing the base-station side to update the communication control model.

### Item 7:

The communication control apparatus according to item 5, wherein
the control entity setter sets the control entity of the communication control model to the base-station side, and wherein
the communication control procedure setter sets, for the communication control model provided to the base-station side and having the base-station side as the control entity, the communication control procedure including at least one of the following:
   (A) the base-station side acquiring information concerning whether or not the communication device can support the communication control model;
   (C) the base-station side initiating the update of the communication control model;
   (D) the base-station side acquiring information concerning the performance of the communication control model in the communication device;
   (E) the communication device providing the base-station side with information concerning the performance of the communication control model in communication device;
   (F1) the base-station side acquiring data for training the communication control model from the communication device;
   (F2) the base-station side notifying the communication device of the initiation of the training of the communication control model; and
   (G) the base-station side acquiring the communication control model updated by the communication device.

### Item 8:

The communication control apparatus according to item 1, wherein the communication control model provider provides the communication control model to both the communication device and the base-station side.

### Item 9:

The communication control apparatus according to item 8, wherein
the control entity setter sets the control entity of the communication control model to the communication device, and wherein
the communication control procedure setter sets, for the communication control model provided to the communication device and the base-station side and having the communication device as the control entity, the communication control procedure including at least one of the following:
   (A1) the communication device acquiring information concerning whether or not the base-station side can support the communication control model;
   (A2) the base-station side acquiring information concerning whether or not the communication device can support the communication control model;
   (B) the communication device acquiring information concerning the storage location of the communication control model on the base-station side;
   (C) the communication device initiating the update of the communication control model in at least one of the communication device and the base-station side;
   (D) the communication device acquiring information concerning the performance of the communication control model on the base-station side;
   (E) the base-station side providing the communication device with information concerning the performance of the communication control model on the base-station side;
   (F1) the communication device acquiring data for training the communication control model from the base-station side;
   (F2) the communication device notifying the base-station side of the initiation of the training of the communication control model in at least one of the communication device and the base-station side;
   (G1) the communication device acquiring the communication control model updated by the base-station side; and
   (G2) the communication device providing the communication control model updated by the communication device to the base-station side.

### Item 10:

The communication control apparatus according to item 8, wherein
the control entity setter sets the control entity of the communication control model to the base-station side, and wherein
the communication control procedure setter sets, for the communication control model provided to the communication device and the base-station side and having the base-station side as the control entity, the communication control procedure including at least one of the following:
   (A) the base-station side acquiring information concerning whether or not the communication device can support the communication control model;
   (B) the base-station side acquiring information concerning the storage location of the communication control model in the communication device;
   (C) the base-station side initiating the update of the communication control model in at least one of the communication device and the base-station side;
   (D) the base-station side acquiring information concerning the performance of the communication control model in the communication device;
   (E) the communication device providing the base-station side with information concerning the performance of the communication control model in communication device;
   (F1) the base-station side acquiring data for training the communication control model from the communication device;
   (F2) the base-station side notifying the communication device of the initiation of the training of the communication control model in at least one of the communication device and the base-station side;
   (G1) the base-station side acquiring the communication control model updated by the communication device; and
   (G2) the base-station side providing the communication control model updated by the base-station side to the communication device.

### Item 11:

A communication control apparatus comprising at least one processor that performs:
causing a communication control model provider to provide a communication control model concerning communication control between a communication device and a base station that provides a communication cell to the communication device, to at least one of the communication device and the base-station side; and
causing a communication control procedure setter to set a communication control procedure for sharing information concerning the use of the communication control model from the one of the communication device and the base-station side to the other.

### Item 12:

A communication control apparatus comprising at least one processor that performs:
causing a communication control model provider to provide a communication control model concerning communication control between a communication device and a base station that provides a communication cell to the communication device, to at least one of the communication device and the base-station side; and
causing a communication control procedure setter to set a communication control procedure for providing a request concerning the use of the communication control model from the other of the communication device and the base-station side to the one.

### Item 13:

A communication control method comprising:
providing a communication control model concerning communication control between a communication device and a base station that provides a communication cell to the communication device, to at least one of the communication device and the base-station side;
setting a control entity of the communication control model to either the communication device or the base-station side; and
setting a communication control procedure for the communication control model in accordance with the location where the communication control model is provided and the control entity.

### Item 14:

A communication control method comprising:
providing a communication control model concerning communication control between a communication device and a base station that provides a communication cell to the communication device, to at least one of the communication device and the base-station side; and
setting a communication control procedure for sharing information concerning the use of the communication control model from the one of the communication device and the base-station side to the other.

### Item 15:

A communication control method comprising:
providing a communication control model concerning communication control between a communication device and a base station that provides a communication cell to the communication device, to at least one of the communication device and the base-station side; and
setting a communication control procedure for providing a request concerning the use of the communication control model from the other of the communication device and the base-station side to the one.

### Item 16:

A computer-readable medium storing a communication control program causing a computer to perform:
providing a communication control model concerning communication control between a communication device and a base station that provides a communication cell to the communication device, to at least one of the communication device and the base-station side;
setting a control entity of the communication control model to either the communication device or the base-station side; and
setting a communication control procedure for the communication control model in accordance with the location where the communication control model is provided and the control entity.

### Item 17:

A computer-readable medium storing a communication control program causing a computer to perform:
providing a communication control model concerning communication control between a communication device and a base station that provides a communication cell to the communication device, to at least one of the communication device and the base-station side; and
setting a communication control procedure for sharing information concerning the use of the communication control model from the one of the communication device and the base-station side to the other.

### Item 18:

A computer-readable medium storing a communication control program causing a computer to perform:
providing a communication control model concerning communication control between a communication device and a base station that provides a communication cell to the communication device, to at least one of the communication device and the base-station side; and
setting a communication control procedure for providing a request concerning the use of the communication control model from the other of the communication device and the base-station side to the one.

The present application claims priority based on Japanese patent application 2022-158717 filed on September 30, 2022, which is hereby incorporated by reference in its entirety.

### [INDUSTRIAL APPLICABILITY]

The present disclosure relates to setting of communication control procedure concerning communication control model.

### [REFERENCE SIGNS LIST]

1 wireless communication system, 2 communication device, 3 communication control apparatus, 11 5G wireless communication system, 13 satellite communication system, 31 communication control model provider, 32 control entity setter, 33 communication control procedure setter, 111 5G base station, 112 5G cell, 131 communication satellite, 132 satellite communication cell, 133 gateway.

## Claims

1. A communication control apparatus comprising at least one processor that performs:
causing a communication control model provider to provide a communication control model concerning communication control between a communication device and a base station that provides a communication cell to the communication device, to at least one of the communication device and the base-station side;
causing a control entity setter to set a control entity of the communication control model to either the communication device or the base-station side; and
causing a communication control procedure setter to set a communication control procedure for the communication control model in accordance with the location where the communication control model is provided and the control entity.

2. The communication control apparatus according to claim 1, wherein the communication control model provider provides the communication control model to the communication device.

3. The communication control apparatus according to claim 2, wherein
the control entity setter sets the control entity of the communication control model to the communication device, and wherein
the communication control procedure setter sets, for the communication control model provided to the communication device and having the communication device as the control entity, the communication control procedure including at least one of the following:
(A1) the communication device acquiring information concerning whether or not the base-station side can support the communication control model;
(A2) the base-station side acquiring information concerning whether or not the communication device can support the communication control model;
(C) the communication device initiating the update of the communication control model;
(D) the communication device acquiring information concerning the performance of the communication control model on the base-station side;
(E) the base-station side providing the communication device with information concerning the performance of the communication control model on the base-station side;
(F1) the communication device acquiring data for training the communication control model from the base-station side;
(F2) the communication device notifying the base-station side of the initiation of the training of the communication control model; and
(G) the communication device acquiring the communication control model updated by the base-station side.

4. The communication control apparatus according to claim 2, wherein
the control entity setter sets the control entity of the communication control model to the base-station side, and wherein
the communication control procedure setter sets, for the communication control model provided to the communication device and having the base-station side as the control entity, the communication control procedure including at least one of the following:
(A) the base-station side acquiring information concerning whether or not the communication device can support the communication control model;
(B) the base-station side acquiring information concerning the storage location of the communication control model in the communication device;
(C) the base-station side initiating the update of the communication control model;
(D) the base-station side acquiring information concerning the performance of the communication control model in the communication device;
(E) the communication device providing the base-station side with information concerning the performance of the communication control model in communication device;
(F1) the base-station side acquiring data for training the communication control model from the communication device;
(F2) the base-station side instructing the communication device to initiate the training of the communication control model; and
(G) the base-station side instructing the communication device to update the communication control model.

5. The communication control apparatus according to claim 1, wherein the communication control model provider provides the communication control model to the base-station side.

6. The communication control apparatus according to claim 5, wherein
the control entity setter sets the control entity of the communication control model to the communication device, and wherein
the communication control procedure setter sets, for the communication control model provided to the base-station side and having the communication device as the control entity, the communication control procedure including at least one of the following:
(A1) the communication device acquiring information concerning whether or not the base-station side can support the communication control model;
(A2) the base-station side acquiring information concerning whether or not the communication device can support the communication control model;
(B) the communication device acquiring information concerning the storage location of the communication control model on the base-station side;
(C) the communication device initiating the update of the communication control model;
(D) the communication device acquiring information concerning the performance of the communication control model on the base-station side;
(E) the base-station side providing the communication device with information concerning the performance of the communication control model on the base-station side;
(F1) the communication device acquiring data for training the communication control model from the base-station side;
(F2) the communication device instructing the base-station side to initiate the training of the communication control model; and
(G) the communication device instructing the base-station side to update the communication control model.

7. The communication control apparatus according to claim 5, wherein
the control entity setter sets the control entity of the communication control model to the base-station side, and wherein
the communication control procedure setter sets, for the communication control model provided to the base-station side and having the base-station side as the control entity, the communication control procedure including at least one of the following:
(A) the base-station side acquiring information concerning whether or not the communication device can support the communication control model;
(C) the base-station side initiating the update of the communication control model;
(D) the base-station side acquiring information concerning the performance of the communication control model in the communication device;
(E) the communication device providing the base-station side with information concerning the performance of the communication control model in communication device;
(F1) the base-station side acquiring data for training the communication control model from the communication device;
(F2) the base-station side notifying the communication device of the initiation of the training of the communication control model; and
(G) the base-station side acquiring the communication control model updated by the communication device.

8. The communication control apparatus according to claim 1, wherein the communication control model provider provides the communication control model to both the communication device and the base-station side.

9. The communication control apparatus according to claim 8, wherein
the control entity setter sets the control entity of the communication control model to the communication device, and wherein
the communication control procedure setter sets, for the communication control model provided to the communication device and the base-station side and having the communication device as the control entity, the communication control procedure including at least one of the following:
(A1) the communication device acquiring information concerning whether or not the base-station side can support the communication control model;
(A2) the base-station side acquiring information concerning whether or not the communication device can support the communication control model;
(B) the communication device acquiring information concerning the storage location of the communication control model on the base-station side;
(C) the communication device initiating the update of the communication control model in at least one of the communication device and the base-station side;
(D) the communication device acquiring information concerning the performance of the communication control model on the base-station side;
(E) the base-station side providing the communication device with information concerning the performance of the communication control model on the base-station side;
(F1) the communication device acquiring data for training the communication control model from the base-station side;
(F2) the communication device notifying the base-station side of the initiation of the training of the communication control model in at least one of the communication device and the base-station side;
(G1) the communication device acquiring the communication control model updated by the base-station side; and
(G2) the communication device providing the communication control model updated by the communication device to the base-station side.

10. The communication control apparatus according to claim 8, wherein
the control entity setter sets the control entity of the communication control model to the base-station side, and wherein
the communication control procedure setter sets, for the communication control model provided to the communication device and the base-station side and having the base-station side as the control entity, the communication control procedure including at least one of the following:
(A) the base-station side acquiring information concerning whether or not the communication device can support the communication control model;
(B) the base-station side acquiring information concerning the storage location of the communication control model in the communication device;
(C) the base-station side initiating the update of the communication control model in at least one of the communication device and the base-station side;
(D) the base-station side acquiring information concerning the performance of the communication control model in the communication device;
(E) the communication device providing the base-station side with information concerning the performance of the communication control model in communication device;
(F1) the base-station side acquiring data for training the communication control model from the communication device;
(F2) the base-station side notifying the communication device of the initiation of the training of the communication control model in at least one of the communication device and the base-station side;
(G1) the base-station side acquiring the communication control model updated by the communication device; and
(G2) the base-station side providing the communication control model updated by the base-station side to the communication device.

11. A communication control apparatus comprising at least one processor that performs:
causing a communication control model provider to provide a communication control model concerning communication control between a communication device and a base station that provides a communication cell to the communication device, to at least one of the communication device and the base-station side; and
causing a communication control procedure setter to set a communication control procedure for sharing information concerning the use of the communication control model from the one of the communication device and the base-station side to the other.

12. A communication control apparatus comprising at least one processor that performs:
causing a communication control model provider to provide a communication control model concerning communication control between a communication device and a base station that provides a communication cell to the communication device, to at least one of the communication device and the base-station side; and
causing a communication control procedure setter to set a communication control procedure for providing a request concerning the use of the communication control model from the other of the communication device and the base-station side to the one.

13. A communication control method comprising:
providing a communication control model concerning communication control between a communication device and a base station that provides a communication cell to the communication device, to at least one of the communication device and the base-station side;
setting a control entity of the communication control model to either the communication device or the base-station side; and
setting a communication control procedure for the communication control model in accordance with the location where the communication control model is provided and the control entity.

14. A communication control method comprising:
providing a communication control model concerning communication control between a communication device and a base station that provides a communication cell to the communication device, to at least one of the communication device and the base-station side; and
setting a communication control procedure for sharing information concerning the use of the communication control model from the one of the communication device and the base-station side to the other.

15. A communication control method comprising:
providing a communication control model concerning communication control between a communication device and a base station that provides a communication cell to the communication device, to at least one of the communication device and the base-station side; and
setting a communication control procedure for providing a request concerning the use of the communication control model from the other of the communication device and the base-station side to the one.

16. A computer-readable medium storing a communication control program causing a computer to perform:
providing a communication control model concerning communication control between a communication device and a base station that provides a communication cell to the communication device, to at least one of the communication device and the base-station side;
setting a control entity of the communication control model to either the communication device or the base-station side; and
setting a communication control procedure for the communication control model in accordance with the location where the communication control model is provided and the control entity.

17. A computer-readable medium storing a communication control program causing a computer to perform:
providing a communication control model concerning communication control between a communication device and a base station that provides a communication cell to the communication device, to at least one of the communication device and the base-station side; and
setting a communication control procedure for sharing information concerning the use of the communication control model from the one of the communication device and the base-station side to the other.

18. A computer-readable medium storing a communication control program causing a computer to perform:
providing a communication control model concerning communication control between a communication device and a base station that provides a communication cell to the communication device, to at least one of the communication device and the base-station side; and
setting a communication control procedure for providing a request concerning the use of the communication control model from the other of the communication device and the base-station side to the one.
